# EUROPEAN PATENT APPLICATION

(11) **EP 1 536 238 A1**
(43) Date of publication of application: **01.06.2005**
(21) Application number: 03741469.5
(22) Date of filing: 17.07.2003
(51) Int. Cl.: G01N 35/04, G01N 35/02, G01N 1/00

(54) **ANALYZING DEVICE**

(30) Priority: 19.07.2002 JP 2002210435
(71) Applicant: ARKRAY, Inc., Kyoto-shi, Kyoto 601-8045 (JP)
(72) Inventor: OKA, Junichi c/o ARKRAY, Inc., Kyoto-shi, Kyoto 601-8045 (JP)
(74) Representative: Pluckrose, Anthony William
(86) International application number: PCT/JP2003/009120
(87) International publication number: WO 2004/010148

(57) **Abstract**

An analyzing device (1) provided with a rotation body (3) for transporting an object (4) to be analyzed. The analyzing device (1) is structured such that the object (4) is held on the rotation body (3) by applying negative pressure to the object (4), and the object (4) is transported in circumferential directions (D3, D4) about the rotation body (3). The rotation body (3) preferably has inner space (30) where negative pressure is generated, placement portions (31A) where the object (4) is positioned and held, and through holes (33) connecting between the placement portions (31A) and the inner space (30). The inner space (30) is preferably provided with a closing member (7) for selecting, by moving the closing member relative to the rotation body (3), between a state where the through holes (33) are opened and a state where the holes are closed.

## Description

### TECHNICAL FIELD

The present invention relates to an analyzing device which incorporates a rotating body for transferring a target analyte.

### BACKGROUND ART

A semiautomatic analyzing device is known which requires a user to supply analyte pieces but is design to transfer the supplied analyte pieces to an optical checking position. The analyte piece may be transferred on a plane by a belt conveyor for example. However, the transfer of the analyte piece on a plane requires a large transfer surface, resulting in a size increase of the analyzing device. Thus, to avoid such a size increase, an analyzing device is available which employs a rotating drum for transfer of analyte pieces.

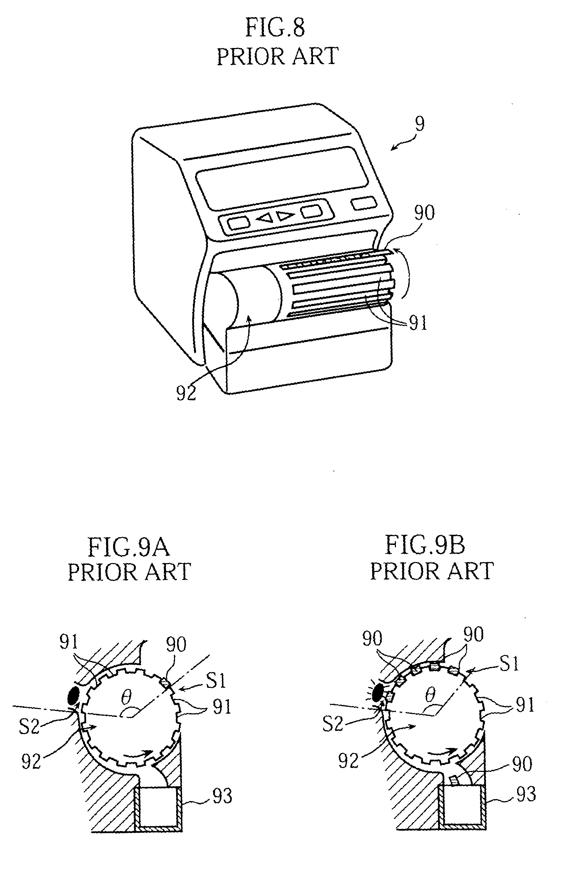

An analyzing device utilizing such rotary transfer is disclosed in JP-A-6-323997 for example. As shown in Fig. 8 of the present application, the analyzing device disclosed in the above publication includes a rotating drum 92 formed with a plurality of recesses 91 for placing test pieces 90. As shown in Figs. 9A-9B, each test piece 90 held in a respective recess 91 is transferred by the rotation of the rotating drum 92 from a loading position S1 to an optical checking position S2. Since the test piece 90 is simply placed in the recess 91, the analyte piece 90 falls down from the recess 91 into a disposal box 93 after the optical check as the rotating drum 92 rotates.

The analyzing device 9 allows the test piece 90 placed on the recess 91 to fall freely. Therefore, the test piece 90 can be transferred only within a range (corresponding to the angular range θ shown in Figs. 9A-9B) in which the test piece 90 does not fall freely. On the other hand, proper analysis of sample liquid needs a predetermined reaction time after the sample liquid is supplied to the test piece 90. To secure a desired reaction time within a short transfer stroke, the rotating speed of the rotating drum 92 must be reduced. In this case, it becomes difficult to analyze a lot of sample liquid in a short time. For analysis of a lot of sample liquid in a short time, the distance between the loading position S1 for placing the analyte piece 90 and the optical checking position S2 must be enlarged. The transfer distance can be enlarged by increasing the diameter of the rotating drum 92, which, however, results in enlargement of the analyzing device 9.

### DISCLOSURE OF THE INVENTION

An object of the present invention is to provide an analyzing device which is capable of successively analyzing target analytes in a short time while realizing a size reduction.

An analyzing device according to the present invention comprises a rotating body for transferring a target analyte. The rotating body holds the target analyte by applying a negative pressure to the target analyte while transferring the target analyte in a circumferential direction of the rotating body.

a typical example of "target analyte" includes an analyzing tool such as a test piece used for analyzing a sample. Another example of target analyte includes an electronic component such as a semiconductor device to be optically checked for its product quality.

The rotating body may include, for example, an inner space for negative pressure application, a plurality of positioning portions each for placing and holding the target analyte, and through-holes for connecting the positioning portions and the inner space. In this case, the analyzing device according to the present invention may further comprise a negative pressure generator for applying the negative pressure to the inner space.

The rotating body may include, for example, a rotary axis extending in substantially horizontal direction.

The analyzing device may be formed, for example, as a cylinder having an outer surface formed with the positioning portions.

The positioning portions may extend in an axial direction of the rotating body for example and are spaced from each other in a circumferential direction of the rotating body.

Preferably, the inner space accommodates a blockade member for selectively closing or opening the through-holes by movement relative to the rotating body.

The blockade member may extend in an axial direction of the rotating body for example and is formed with a cutout extending in the axial direction.

The analyzing device according to the present invention may further include, for example, a housing for accommodating at least a part of the rotating body, and one end of the blockade member may be non-rotatably supported by the housing.

The analyzing device according to the present invention may further include an optical detector for optically analyzing the target analyte. In this case, the blockade member opens the through-hole connected to the positioning portion on which the target analyte is placedwhen the the target analyte assumes a position for measurement by the optical detector, thereby applying the negative pressure on the target analyte.

The target analyte may be transferred from a position at which the target analyte is placed at the positioningportion to the position for measurement by the optical detector, by rotating the rotating body through no less 180 degrees for example.

Preferably, the blockade member closes the through-hole connected to the positioning portion at a position where the target analyte is placed on the positioning portion, thereby preventing the target analyte from being subjected to the negative pressure.

The analyzing device according to the present invention may further comprise a blade for removing the target analyte held on the positioning portion.

In this case, the rotating body may be provided with a guide portion for allowing the blade to move relative to the rotating body in intimate contact therewith.

Preferably, a suction applying clearance is provided between each positioning portion and the through-hole connected to the positioning portion, and the suction applying clearance applies the negative pressure on the target analyte in an area extending in an axial direction of the rotating body.

The suction portion may be formed by forming a recess smaller than eachpositioningportion adj acent to the disposing portion and closer to an axis of the rotating body, for example.

In the analyzing device according to the present invention, if the target analyte is an analyzing tool for analyzing a sample, an excess of the sample adhering to the analyzing tool may be preferably removed when the analyzing tool is subjected to the negative pressure.

### BRIEF DESCRIPTION OF THE DRAWINGS

Fig. 1 is an overall perspective view showing an analyzing device according to a first embodiment of the present invention.
Fig. 2 is a plan view illustrating a principal part of the inner structure of the analyzing device shown in Fig. 1.
Fig. 3 is a section view illustrating a rotating body together with its related components.
Fig. 4 is a section view taken along lines IV-IV in Fig. 2.
Fig. 5 is a section view similar to Fig. 4 illustrating a analyzing device according to a second embodiment of the present invention.
Fig. 6 is an overall perspective view of a rotating drum used in an example of the present invention.
Fig. 7 is a section view taken along lines VII-VII in Fig. 6.
Fig. 8 is an overall view illustrating an example of conventional analyzing device.
Figs. 9A and 9B are section views illustrating a principal part of the analyzing device shown in Fig. 8.

### BEST MODE FOR CARRYING OUT THE INVENTION

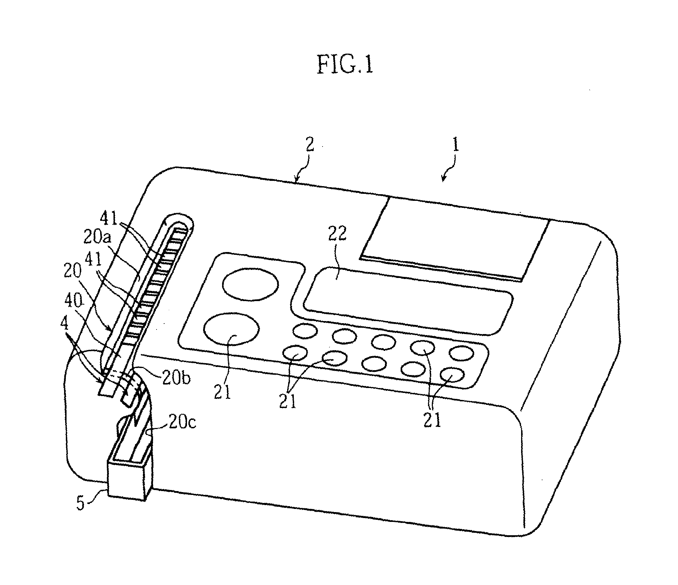

First, a first embodiment according to the present invention is described referring to Figs. 1-4.

An analyzing device 1 illustrated in Figs. 1-4 includes a housing 2 which accommodates a rotating body 3. Test pieces 4 are transferred circumferentially of the rotating body 3 under application of a negative pressure to the test pieces 4. Each of the illustrated test pieces 4 includes a strip 40 and a plurality of reagent pads 41 arranged lengthwise of the strip.

As shown in Fig. 1, the housing 2 is provided with a cutout 20 in addition to a plurality of operating buttons 21 and a display 22. The cutout 20 includes a first area 20a for exposing recesses 31 of the rotating body 3 which will be described later, a second area 20b for allowing the movement of the test pieces 4, and a third area 20c for removably inserting a disposal box 5. The exposure of the recesses 31 at the first area 20a allows placement of the test pieces 4 on the rotating body 3.

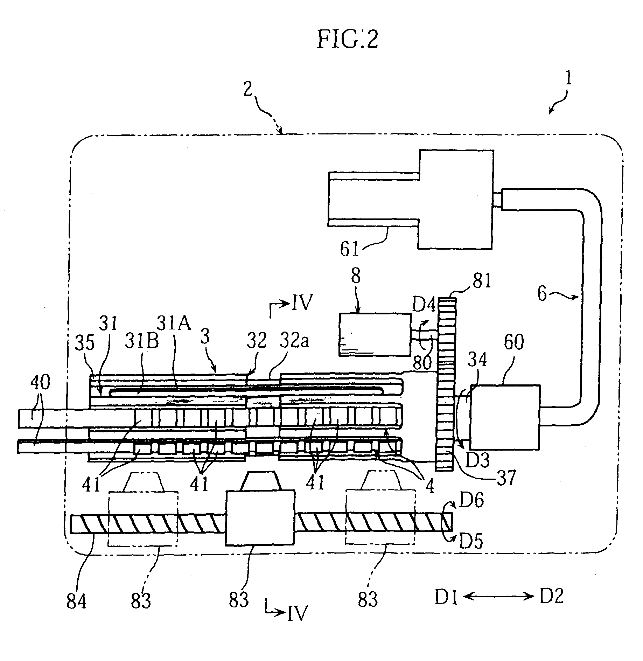

As shown in Figs. 2-4, the rotating body 3 is cylindrical for defining a tubular inner space 30. The rotating body 3 includes a circumferential outer surface formed with the plurality of recesses 31 for holding the test pieces 4, and a plurality of guide portions 32.

The recesses 31 extend axially of the rotating body 3 (D1-D2 direction in Figs. 2-3) and are spaced from each other circumferentially of the rotating body 3 (D3 direction in Fig. 2). In the present embodiment, the rotating body 3 is formed with eight recesses 31 in total. Each recess 31 includes a first portion 31A and a second portion 31B.

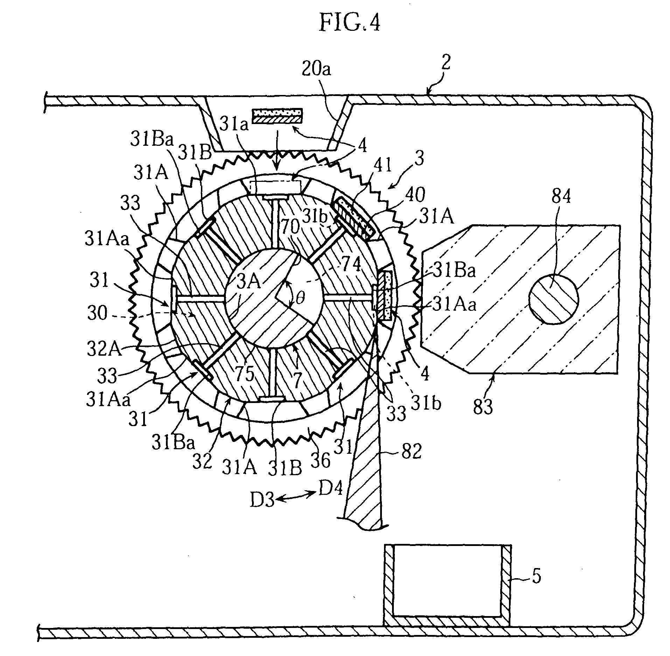

The first portion 31A serves to place a respective test piece 4 and has a width corresponding to the width of the test piece 4. The second portion 31B forms a space 31b for exerting a negative pressure substantially over the entire length of the test piece 4 placed on the first portion 31A, and has a width smaller than that of the first portion 31A. Thus, as shown well in Fig. 4, the test piece 4 is placed in the recess 31 in contact with the bottom 31Aa of the first portion 31A, while the space 31b extending in the D1-D2 direction (see Fig. 2) is formed between the test piece 4 and the bottom 31Ba of the second portion 31B.

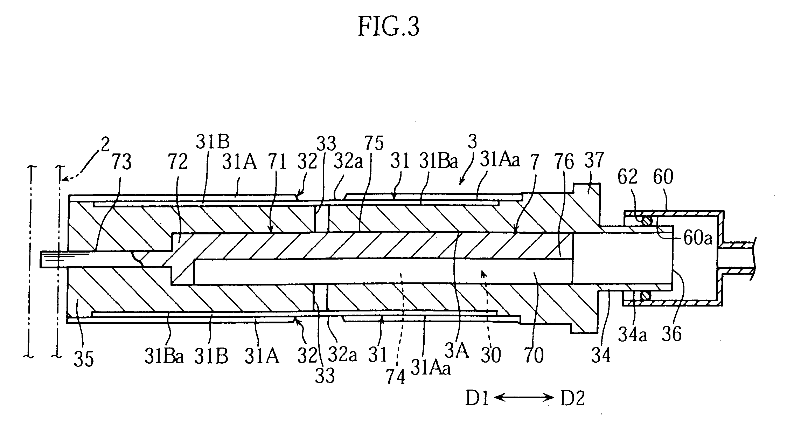

As shown in Figs. 3 and 4, the bottom 31Ba of the second portion 31B is provided with a through-hole 33 connected to the inner space 30 of the rotating body 3. The inner space 30 communicates with the recess 31 via the through-hole 33.

As shown in Figs. 2 and 4, the plurality of guide portions 32 are provided between the adjacent recesses 31 in alignment with each other in circumferential direction D3 of the rotating body 3. Each guide portion 32 allows movement of the rotating body 3 relative to a blade 82 in intimate contact therewith, as described later. The guide portion has a bottom 32a which is continuously flush with the bottom 31Aa of the first portion 31A.

As shown in Figs. 2 and 3, the rotary body 3 includes an end 34 which is connected to a pump 61 via a pipe 6 including a joint 60. Specifically, the end 34 of the rotary body 3 is inserted in the joint 60, while an o-ring 62 is provided between an outer surface 34a of the end and an inner surface 60a of the joint 60. Due to this structure, the inner space 30 of the rotating body 3 is reliably kept in a highly air-tight condition, while the pump 61 is used to apply a negative pressure in the inner space 30. The joint 60 is fixed to the housing 2, though not specifically shown. As a result, the end 34 of the rotating body 3 is supported by the housing 2 via the joint 60.

As shown in Figs. 3 and 4, the inner space 30 accommodates a blockade member 7. The blockade member 7 includes a body 71 formed with a cutout 70 and a shaft 73 extending from an end 72 of the body 71. The shaft 73 is non-rotatably fixed to the housing 2. With such an arrangement, the blockade member 7 is non-rotatable, while an end 35 of the rotating body 3 is supported by the housing 2 via the blockade member 7.

Due to this structure, the rotating body 3 and the blockade member 7 can be removed easily, thereby facilitating the cleaning of the rotating body 3 and the blockade member 7.

The body 71 is a cylinder having an outer diameter corresponding to the inner diameter of the rotating body 3, and is formed with the cutout 70. The cutout 70 forms a space 74 between the rotating body 3 and the blockade member 7, while the outer surface 75 of the body 71 (other than the portion formed with the cutout 70) contacts an inner surface 3A of the rotating body 3. Therefore, those of the through-holes 33 facing the cutout 70 of the blockade member 7 are kept open, while the other through-holes 33 facing the contacting portion of the blockade member 7 are closed. As a result , communication with the inner space 30 is evaded at those of the recesses 31 which do not carry any test piece 4 and at those of the recesses 31 where negative pressure is unnecessary, so that the negative pressure in the inner space 30 is prevented from being reduced needlessly.

The cutout 70 is sector-shaped with an angle θ of about 90 degrees as illustrated, while extending in the axial direction D1-D2 of the blockade member 7. The cutout 70 is open at an end 76 of the blockade member 7 in the axial direction D2. With such an arrangement, the space 74 defined by the cutout 70 communicates with an end opening 36 of the rotating body 3, whereby the negative pressure is generated in the space 74 by the pump 61.

As shown in Figs. 2 and 4, the end 34 of the rotating body 3 is provided with a gear 37. The gear 37 engages a gear 81 connected to a rotating shaft 80 of a motor 8. As described above, the rotating body 3 is supported by the joint 60 at the end 34 and by the blockade member 7 at the end 35. Thus, the rotating body 3 can be rotated around the blockade member 7 in the direction of the arrow D3 by rotating the rotating shaft 80 of the motor 8 in the direction of the arrow D4. The rotating body 3 can be intermittently rotated through 45 degrees at one time by controlling the rotation of the rotating shaft 80 of the motor 8. The interval between a preceding rotation of the rotating body 3 and a succeeding rotation of the rotating body 3 may be set at 8-10 seconds.

The housing 2 accommodates a blade 82 and an optical detector 83 in addition to the rotating body 3. The blade 82 contacts the rotating body 3 at the bottom 32a of each guide portion 32 or at the bottom 31Aa of the first portion 31A of each recess 31 to scrape off the test piece 4 held on the rotating body 3. With such an arrangement, during the rotation of the rotating body 3, the blade 82 sequentially contacts different portions on the rotating body 3. In this state, when the test piece 4 is carried to the portion where the blade 82 contacts, the tip end of the blade 82 is inserted between the bottom of the test piece 4 and the bottom 31Aa of the first portion 31A. Thus, the test piece 4 is scraped off from the rotating body 3.

On the other hand, the optical detector 83 includes a light source such as LED and includes a light receiver such as photodiode to irradiate the reagent pads 41 of the test piece 4 and to receive the reflected light therefrom. The optical detector 83 is supported by the housing 2 via a screw 84. The screw 84 is selectively rotated in the direction of arrow D5 or D6 to reciprocally move the optical detector in the arrow D1-D2 directions. Thus, when the test piece 4 provided with the plurality of reagent pads 41 is irradiated, each reagent pad 41 can be individually irradiated and the respective reflected light is received.

Next, description is made as to the analyzing operation of a sample liquid using the analyzing device 1. It should be noted that the reagent pads 41 of each test piece 4 is impregnated with a sample liquid beforehand, while the pump 61 applies a negative pressure is applied to the space 74 formed by the cutout 70 in the rotating body 3.

As shown in Figs. 2 and 4, in the analysis of a sample liquid, the test piece 4 is placed in the first portion 31A of a selected recess 31 of the rotating body 3 via the first area 20a of the cutout 20. In this state, the test piece 4 contacts the bottom 31Aa of the first portion 31A but is spaced from the bottom 31Ba of the secondportion 31B by a predetermined distance. As the rotating body 3 is intermittently rotated through 45 degrees at a time as described above, the test piece 4 can be placed when the rotating body 3 is stopped. Preferably, the test piece 4 is placed every time the rotating body 3 is rotated through 45 degrees for realizing successive supply of test pieces 4.

The test piece 4 is transferred due to the rotation of the rotating body 3, while a negative pressure is generated in the space 74. Under this condition, the test piece 4 is subjected to the negative pressure as soon as the recess 31 communicates with the space 74 via through-hole 33, whereby the test piece 4 is held on the rotating body 3. As the space 31b extending in the D1-D2 direction exists between the through-hole 33 and the test piece 4, the bottom of the test piece 4 is subjected to the negative pressure substantially over the entire area thereof. In this way, the test piece 4 is properly held at the first portion 31A, and the test piece 4 is prevented from freely falling from the rotating body 3. Further, the application of the suction force onto the test piece 4 provides an additional function of removing an excess of the sample liquid attached to the test piece 4.

For more reliable removal of the excess sample liquid attached to the test piece 4, a plurality of grooves may be formed at the portion of each recess 31 which contacts the test piece 4.

The test piece 4 faces the optical detector 83 when the rotating body 3 is rotated through 90 degrees after the test piece 4 is placed. Under this positional relationship, the optical detector 83 irradiates the respective reagent pads 41 of the test piece 4, and the reflected light from the reagent pad 41 is received at the optical detector 83. More specifically, the screw 84 is rotated in the direction of the arrow D5 to move the optical detector 83 in the direction of the arrow D1, while successively performing light irradiation and reception of the reflected light with respect to each reagent pad 41 of the test piece 4. Based on the measurement of the optical detector 83, the analyzing device 1 performs analysis of the sample liquid.

After the measurement of the optical detector 83 is completed, the screw 84 is rotated in the direction of the arrow D6 to move the optical detector 83 in the direction of the arrow D2, whereby the optical detector 83 is returned to its initial position. The optical detector 83 performs measurement when the rotating body 3 is stopped, and after the measurement, the rotating body is moved again. When the rotating body 3 is rotated through a predetermined degree, the test piece 4 arrives at the position where the blade 82 is provided. In this state, the blade 82 comes into contact with the bottom 31Aa of the first portion 31A of the recess 31, so that the tip of the blade 82 is inserted between the bottom of the test piece 4 and the bottom 31Aa of the first portion 31A. As a result, the test piece 4 is brought out of intimate contact with the bottom 31Aa of the first portion 31A, whereby the test piece 4 is scraped off the recess 31 or the rotating body 3. The scraped test piece 4 is accommodated in the disposal box 5.

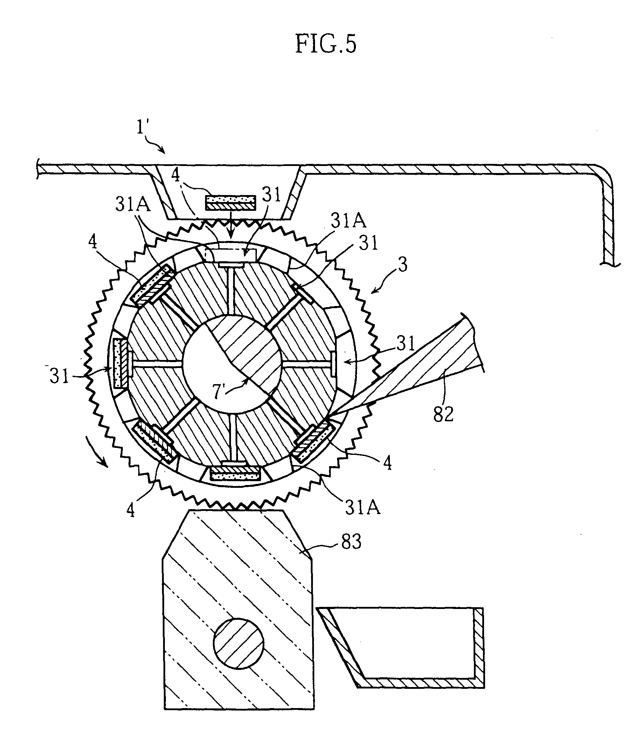

Next, a second embodiment according to the present invention is described referring to Fig. 5. It should be noted that in Fig. 5, elements similar to those described already referring to Figs. 1-4 are given the same reference numbers, and duplicated description will be omitted.

An analyzing device 1' illustrated in Fig. 5 includes, similarly to the above-described analyzing device 1, a rotating body 3 (see Figs. 1-4) which is formed with recesses 31 each having a first portion 31A for placing a test piece 4 from above the rotating body. On the other hand, the analyzing device 1' includes an optical detector 83 under the rotating body 3. The rotating body 3 is rotated through 180 degrees to transfer the test piece 4 placed on the first portion 31A to such a position that the test piece 4 faces the optical detector 83. The analyzing device 1' needs to hold the test piece 4 even if the test piece 4 comes to the lowermost portion of the rotating body 3. For this reason, a cutout 70' formed at a blockade member 7' is configured differently from the cutout 70 (see Figs. 3-4) formed at the blockade member 7 of the above-described analyzing device 1. Further, due to optical detection at the lowermost portion of the rotating body 3, a blade 82 is also arranged at a different position. However, the analyzing device 1' performs analysis of a sample liquid in a manner similar to the analyzing device 1 (see Figs. 1-4).

The analyzing device 1' is able to transfer the test piece 4 for a distance corresponding to the distance for which the rotating body 3 rotates through 180 degrees. Such a transfer distance is difficult to achieve in an analyzing device in which free-fall is utilized for removal of a test piece. Therefore, the analyzing device 1' can provide a larger transfer distance without increasing the diameter of the rotating body 3. In this way, the analyzing device 1' is able to increase the transfer distance by holding the test piece 4 under a suction force while realizing a size reduction of the analyzing device 1' by utilizing the rotating body 3 for transferring the test piece 4. As a result, the analyzing device 1' is capable of successively receiving test pieces 4 to analyze a lot of sample liquid in a short time.

The present invention is not limited to the specific structures set forth in the above embodiments, but may be modified in various ways. For example, the number of the recesses for placing the test pieces is not limited to eight, and each recess may or may not be designed as a recess including two portions (first and second portions) having different widths. The number and position of through-holes for applying a negative pressure to the recess may also be modified.

The present invention may be applied not only to the analyzing device for analysis of test pieces, but to an analyzing device for analysis of samples using analyzing tools other than the test pieces, or to an analyzing device for checking products.

### EXAMPLE

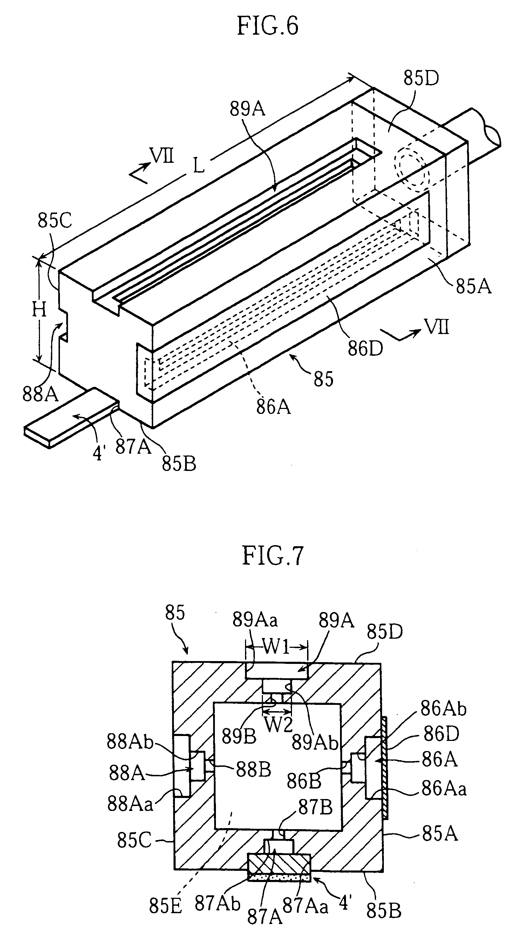

The inventor examined the utility of a method for transferring test pieces held on a rotating body under a suction force. A square tube 85 shown in Figs. 6-7 was used as a rotating body. The square tube 85 included four side surfaces 85A-85D, and each of the side surfaces 85A-85D was formed with a respective recess 86A-89A. The dimension of the square tube 85 was H×H×L=15×15×100mm. Each of the recesses 86A-89A included a respective positioning portion 86Aa-89Aa (corresponding to the first portion 31A of each recess 31 of the analyzing device 1) and a respective suction portion 86Ab-89Ab (corresponding to the second portion 31B of each recess 31 of the analyzing device 1). Each of the recesses 86A-89A communicated with the inner space 85E of the square tube 85 via a respective through-hole 86B-89B. Each of the recesses 86A-89A had a width W1 of 5mm, each of the suction portions 86Ab-89Ab had a width W2 of 2.5mm, and the inner space 85E had a capacity of 1030mm³. The inner space 85E was subj ected to a negative pressure by a non-illustrated pump. A test piece 4' had a width of 5mm and a length of 100mm.

For utility, the following points should be checked. First, since the test piece 4' may be optically detected at the lowermost position of the rotating body (square tube 85), the test piece 4' needs to be held at the lowermost position of the rotating body (square tube 85) (the position shown in Figs 6 and 7), and the test piece 4' does not come off due to a slight external force. Secondly, the test piece 4' once placed can be corrected in position. The first requirement may be met by increasing the suction force applied to the test piece 4, whereas the suction force should be reduced to meet the second requirement.

In the actual check, a negative pressure was applied to the inner space 85E with the recess 86A closed by an adhesive tape 86D, and the test piece 4' was held in the recess 87A under suction. In this state, the examination was performed to determine a maximum negative inner pressure which still allowed relatively easy movement of the test piece 4'. The result was -4.90x10³Pa. On the other hand, the examination was also performed to determine a minimum negative inner pressure which still allowed the test piece 4' to be held at the lowermost position of the square tube 85 even if it was touched lightly with a finger. The result was -1.96x10³Pa. Thus, using the illustrated square tube 85, the test piece 4' can be held and readjusted in position by setting the inner pressure of the inner space 85E in a range between -4.90x10³Pa and -1.96x10³Pa. In other words, the examination has confirmed that there is a certain range of suction force which enables retention and positional readjustment of the test piece 4', so that the holding of the test piece 4' under suction is applicable to the rotating body set forth in the foregoing embodiment.

## Claims

1. An analyzing device comprising a rotating body for transferring a target analyte,
wherein the rotating body holds the target analyte by applying a negative pressure to the target analyte while transferring the target analyte in a circumferential direction of the rotating body.

2. The analyzing device according to claim 1, wherein the rotating body includes an inner space for negative pressure application, a plurality of positioning portions each for placing and holding the target analyte, and through-holes for connecting the positioning portions and the inner space.

3. The analyzing device according to claim 2, further comprising a negative pressure generator for applying the negative pressure to the inner space.

4. The analyzing device according to claim 1, wherein the rotating body includes a rotary axis extending in substantially horizontal direction.

5. The analyzing device according to claim 2, wherein the rotating body is formed as a cylinder having an outer surface formed with the positioning portions.

6. The analyzing device according to claim 5, wherein the positioning portions extend in an axial direction of the rotating body and are spaced from each other in a circumferential direction of the rotating body.

7. The analyzing device according to claim 2, wherein the inner space accommodates a blockade member for selectively closing or opening the through-holes by movement relative to the rotating body.

8. The analyzing device according to claim 7, wherein the blockade member extends in an axial direction of the rotating body and is formed with a cutout extending in the axial direction.

9. The analyzing device according to claim 7, further comprising a housing for accommodating at least a part of the rotating body, wherein one end of the blockade member is non-rotatably supported by the housing.

10. The analyzing device according to claim 7, further comprising an optical detector for optically analyzing the target analyte, wherein the blockade member opens the through-hole connected to the positioning portion on which the target analyte is placed when the the target analyte assumes a position for measurement by the optical detector, thereby applying the negative pressure on the target analyte.

11. The analyzing device according to claim 10, wherein the target analyte is transferred by rotating the rotating body through no less 180 degrees, the target analyte being transferred from a position at which the target analyte is placed at the positioning portion to the position for measurement by the optical detector.

12. The analyzing device according to claim 7, wherein the blockade member closes the through-hole connected to the positioning portion at a position where the target analyte is placed on the positioning portion, thereby preventing the target analyte from being subjected to the negative pressure.

13. The analyzing device according to claim 1, further comprising a blade for removing the target analyte held on the positioning portion.

14. The analyzing device according to claim 13, wherein the rotating body is provided with a guide portion for allowing the blade to move relative to the rotating body in intimate contact therewith.

15. The analyzing device according to claim 2 , wherein a suction applying clearance is provided between each positioning portion and the through-hole connected to the positioning portion, the suction applying clearance applying the negative pressure on the target analyte in an area extending in an axial direction of the rotating body.

16. The analyzing device according to claim 15, wherein the suction portion is formed by forming a recess smaller than each positioning portion adjacent to the disposing portion and closer to an axis of the rotating body.

17. The analyzing device according to claim 1, wherein the target analyte is an analyzing tool for analyzing a sample, an excess of the sample adhering to the analyzing tool being removed when the analyzing tool is subjected to the negative pressure.
